# EUROPÄISCHE PATENTSCHRIFT

(11) **EP 1 207 082 B1**
(45) Veröffentlichungstag und Bekanntmachung des Hinweises auf die Patenterteilung: **11.05.2005**
(21) Anmeldenummer: 01126507.1
(22) Anmeldetag: 10.11.2001
(51) Int. Cl.: B60R 13/10, B44B 5/00

(54) **Maschine zur Herstellung von Schildern, insbesondere Kraftfahrzeug-Kennzeichenschildern**
Machine for the manufacture of signs, licence-plates in particular
Machine fabricant des enseignes, en particulier des plaques d'immatriculation

(30) Priorität: 18.11.2000 DE 10057399
(43) Veröffentlichungstag der Anmeldung: 22.05.2002
(73) Patentinhaber: Erich Utsch AG, 57080 Siegen (DE)
(72) Erfinder: Wurmbach, Lothar, 57074 Siegen (DE)
(74) Vertreter: Pürckhauer, Rolf, Dipl.-Ing.

(56) Entgegenhaltungen:
- EP-A- 0 105 643
- EP-A- 0 754 569
- DE-A- 3 203 801
- DE-C- 19 602 153

## Beschreibung

Die Erfindung betrifft eine Maschine zur Herstellung von Schildern, insbesondere Kraftfahrzeug-Kennzeichenschildern, gemäß dem Oberbegriff als Anspruchs 1.

Zur Fertigung von Kraftfahrzeug-Kennzeichenschildern benötigen die Prägeanstalten eine Presse zum Prägen der Kennzeichenschilder mit Kennzeichennummern aus Schildplatinen aus Blech und eine Maschine zum Einfärben der geprägten Kennzeichenschilder.

Die gattungsbildende DE 32 03 801 A beschreibt eine Maschineneinheit, die aus einer Prägepresse und einer Einfärbmaschine zur Herstellung von Kraftfahrzeug-Kennzeichenschildern besteht. Prägepresse und Einfärbmaschine sind in einer Fertigungslinie angeordnet und arbeiten vollautomatisch.

Aus der EP-A-0 105 643 ist eine Anlage zur Herstellung von Kraftfahrzeug-Kennzeichenschildern bekannt, in der in aufeinanderfolgenden Fertigungsstufen eine reflektierende Folie auf ein farbiges Blechband aufgeklebt, von dem mit der Folie beklebten Blechband Schildplatinen mit der gewünschten Länge abgeschnitten werden und auf einer Prägepresse Legenden mit den gewünschten Ziffern und Buchstaben in die Schildplatinen eingeprägt werden, wobei bei dem Prägevorgang die Ziffern und Buchstaben aus dem reflektierenden Folienmaterial ausgeschnitten werden, so daß diese in der Farbe des als Ausgangsmaterial dienenden Blechbandes erscheinen.

Gegenstand der DE 196 02 153 C ist eine Maschine zum Einfärben von geprägten Kraftfahrzeug-Kennzeichenschildern.

Mit dem aus der EP-A-0 754 569 bekannten Prägewerkzeug werden Platinen zu Kraftfahrzeug-Kennzeichenschildern geprägt, wobei die erhabenen Abschnitte an der Sichtseite der Schilder unter Verwendung einer mit einer ablösbaren Farbe versehenen Kunststoffolie eingefärbt werden.

Die Anschaffungskosten für die vorbeschriebenen Maschinen sind für Prägeanstalten, die Kraftfahrzeug-Kennzeichenschilder nur in kleineren Stückzahlen herstellen, verhältnismäßig hoch.

Der Erfindung liegt die Aufgabe zugrunde, eine Maschine zur Herstellung von Schildern, insbesondere Kraftfahrzeug-Kennzeichenschildern mit einem niedrigen Herstellungspreis insbesondere für kleinere Prägeanstalten zu entwickeln.

Diese Aufgabe ist erfindungsgemäß gelöst durch eine Maschineneinheit gemäß Patentanspruch 1, die aus einer Presse zum Prägen von Kraftfahrzeug-Kennzeichenschildern mit Kennzeichennummern aus Schildplatinen aus Blech und einer Maschine zum Einfärben der geprägten Kennzeichenschilder besteht, die auf dem Gehäuse der Prägepresse befestigt ist.

Die Unteransprüche beinhalten vorteilhafte und zweckmäßige Weiterbildungen der Erfindung.

Die Kombination einer Presse zum Prägen von Schildern, insbesondere Kraftfahrzeug-Kennzeichenschildern mit einer Maschine zum Einfärben der geprägten Kennzeichenschilder führt zu einer preisgünstigen Maschine in Kompaktbauweise mit einer Doppelfunktion zur Herstellung insbesondere von Kraftfahrzeug-Kennzeichenschildern. Die neue Maschine füllt eine Marktlücke, zeichnet sich durch eine einfache konstruktive Grundausstattung aus, ist einfach bedienbar und eignet sich aufgrund ihres günstigen Herstellungspreises für Prägeanstalten, die Kraftfahrzeug-Kennzeichenschilder in kleineren Stückzahlen herstellen.

Die Erfindung ist nachstehend anhand schematischer Zeichnungsfiguren erläutert, die folgendes darstellen:
- Fig. 1: die Vorderansicht einer Maschineneinheit zum Prägen und Einfärben von Kraftfahrzeug-Kennzeichenschildern und
- Fig. 2: einen Schnitt nach Linie II-II der Fig. 1 in vergrößerter Darstellung.

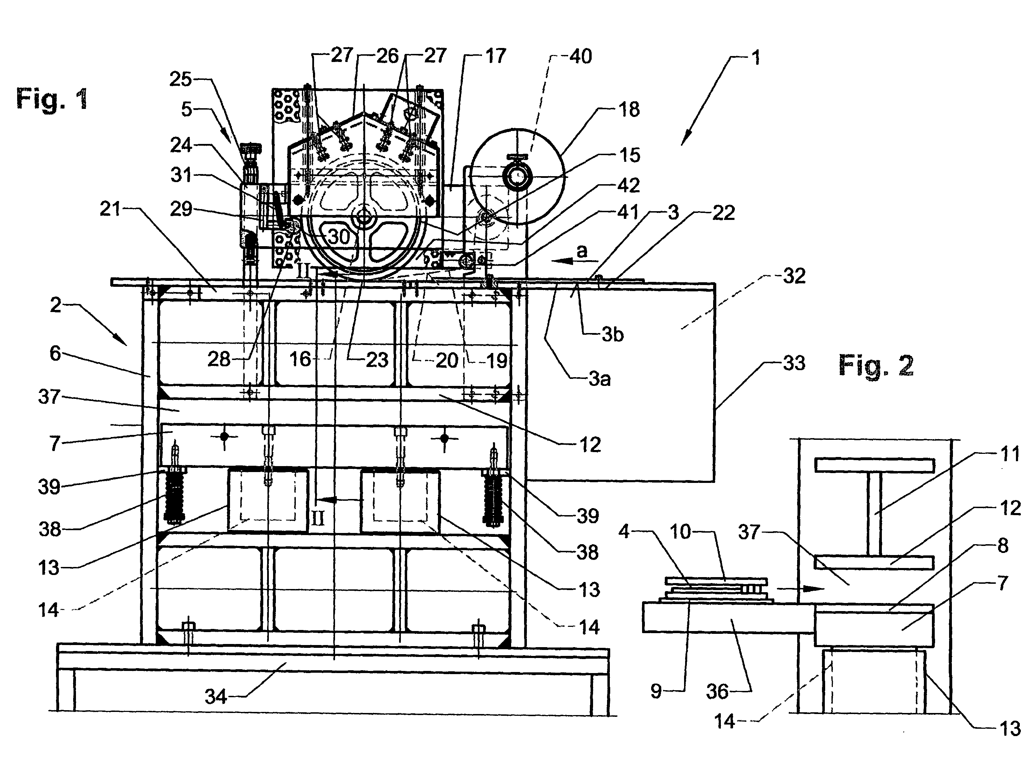

Die Maschine nach den Figuren 1 und 2 zur Herstellung von Kraftfahrzeug-Kennzeichenschildern verkörpert eine Maschineneinheit 1, die aus einer Presse 2 zum Prägen von Kraftfahrzeug-Kennzeichenschildern 3 mit Kennzeichennummern aus Schildplatinen 4 aus Blech und einer Maschine 5 zum Einfärben der geprägten Kennzeichenschilder 3 besteht, die auf dem Gehäuse 6 der Prägepresse 2 befestigt ist.

Die Presse 2 zum Prägen von Kraftfahrzeug-Kennzeichenschildern 3 weist als wesentliche Bauteile einen Hubtisch 7 mit einer Druckplatte 8 zur Aufnahme von auf einer Schiebeplatte 9 angeordneten Präge- bzw. Klotzwerkzeugen 10 mit einer in diese eingesetzten Schildplatine 4, eine an einem Joch 11 befestigte Gegendruckplatte 12 sowie ein nicht dargestelltes Hydraulikaggregat mit einer elektromotorisch betriebenen Hydraulikpumpe zum Antrieb der einfachwirkenden Druckkolben 14 zweier Hydraulikzylinder 13 zur Betätigung der Druckplatte 8 auf.

Die Maschine 5 zum Einfärben der Kennzeichenschilder 3 ist mit einer Andruckwalze 15, die durch einen Elektromotor 16 drehangetrieben und in einem Schwenkrahmen 17 drehbar gelagert ist, einer vor der Andruckwalze 15 angeordneten Abwickelspule 18 für ein auf der Bandunterseite 20 mit heiß ablösbarer Farbe beschichtetes Kunststoff-Folienband 19 und einem auf dem Oberrahmen 21 des Pressengehäuses 6 befestigten Auflagetisch 22 für die geprägten, einzufärbenden Kennzeichenschilder 3 ausgerüstet.

Der Durchtrittsspalt 23 für die Kennzeichenschilder 3 zwischen Andruckwalze 15 und Auflagetisch 22 ist durch Anstellen und Abheben des Schwenkrahmens 17 mit der Andruckwalze 15 gegen den bzw. von dem Auflagetisch 22 mittels einer an dem freien Ende 24 des Schwenkrahmens 17 angreifenden Stellvorrichtung 25 einstellbar.

Die mit Gummi oder dergleichen Material beschichtete Andruckwalze 15 der Einfärbmaschine 5 wird mittels eines an dem Schwenkrahmen 17 angebrachten Heizkastens 26 erhitzt, der mit Infrarotstrahlern 27 bestückt ist, die obere Hälfte der Andruckwalze 15 umschließt und auf der Unterseite offen ist.

Zur Überwachung und Regelung der Oberflächentemperatur der Andruckwalze 15 dient ein Temperaturfühler 28, der an einem an dem Schwenkrahmen 17 schwenkbar angebrachten Haltewinkel 29 befestigt ist, der sich mit einer Rolle 30 an der Andruckwalze 15 abstützt und mittels einer Druckfeder 31 gegen die Andruckwalze 15 gedrückt wird, so daß der Temperaturfühler 28 auch bei einem sich aufgrund von Wärmedehnungen und Schrumpfungen ändernden Durchmesser der Andruckwalze 15 immer einen konstanten Abstand von der Oberfläche der Andruckwalze 15 einnimmt.

Die Maschineneinheit 1 ist mit einer Steuereinheit 32 für den elektrischen Antriebsmotor 16 der Andruckwalze 15 und den Heizkasten 26 zum Aufheizen der Andruckwalze 15 der Einfärbmaschine 5 sowie für die elektrische Pumpe des Hydraulikaggregats für den Hubantrieb der Druckplatte 8 der Prägepresse 2 ausgestattet.

Die Steuereinheit 32 ist in einen an dem Pressengehäuse 6 befestigten Schaltkasten 33 eingebaut.

Die Maschineneinheit steht auf einem Untergestell 34, so daß Prägepresse 2 und Einfärbmaschine 5 im Zugriffsbereich einer Bedienungsperson liegen.

Die Maschineneinheit zum Prägen von Kraftfahrzeug-Kennzeichenschildern 3 mit Kennzeichennummern und zum Einfärben der geprägten Kennzeichenschilder mit einer schwarzen Farbe arbeitet wie folgt:

Zum Prägen eines Kraftfahrzeug-Kennzeichenschildes 3 mit einer aus Buchstaben und Ziffern bestehenden Legende wird ein Satz von Prägewerkzeugen 10 mit den gewünschten Buchstaben und Ziffern auf eine Schiebeplatte 9 gelegt, und in die Prägewerkzeuge 10 wird eine Schildplatine 4 mit einem vorgeprägten Rand vorzugsweise aus Aluminiumblech eingesetzt. Anschließend wird die Schiebeplatte 9 zusammen mit den Prägewerkzeugen 10 und der Schildplatine 4 von Hand über einen an der Druckplatte 8 der Presse 2 befestigten Werkzeugtisch 36 in den Spalt 37 zwischen Druck- und Gegendruckplatte 8, 12 der Presse 2 eingeschoben. Nach Einschalten des Hydraulikaggregats der Presse 2 wird in den beiden parallel wirkenden Hydraulikzylindern 13 ein Druck aufgebaut, mit dem der Hubtisch 7 zusammen mit der Druckplatte 8 nach oben gegen die Gegendruckplatte 12 gedrückt wird. Dabei wird die Schildprägeform mit den einzelnen Prägewerkzeugen 10 zusammengedrückt, bis ein an einem Entlastungs- bzw. Umschaltventil eingestellter Solldruck erreicht ist. Beim Erreichen des Solldrucks schaltet das Ventil um und entlastet die Hydraulikzylinder 13, so daß sich der Hubtisch 7 mit der Druckplatte 8 unter Einwirkung von an dem Hubtisch angreifenden Rückstellfedern 38 nach unten in seine durch Anschläge 39 bestimmte Ruheposition absenkt.

Zum Einfärben des der Presse 2 entnommenen, geprägten Kennzeichenschildes 3 werden zunächst der Heizkasten 26 und der elektrische Antriebsmotor 16 der Andruckwalze 15 eingeschaltet. Danach wird eine bestimmte Länge eines unverbrauchten bzw. verbrauchten Folienbandes 19 von einer auf die Abwickelspule 18 aufgesetzten frischen bzw. bereits benutzen Folienbandrolle 40 von Hand abgewickelt, das Folienband um das Einschiebeende 3a des Schildes 3 gezogen und an die Unterseite 3b desselben angelegt. Anschließend wird das derart mit Folienband 19 teilweise bedeckte Kennzeichenschild 3 von Hand über den Auflagetisch 22 mit dem Einschiebeende 3a in den Durchtrittsspalt 23 zwischen Andruckwalze 15 und Auflagetisch 22 geschoben. Sobald das von Hand vorgeschobene Kennzeichenschild 3 die rotierende, aufgeheizte Andruckwalze 15 erreicht, wird aufgrund des Reibungskontaktes zwischen rotierender Andruckwalze 15, Folienband 19, Kennzeichenschild 3 und Auflagetisch 22 das Kennzeichenschild 3 zusammen mit dem sich von der Abwickelspule 18 aufgrund der aufgebrachten Bandzugspannung abwickelnden Folienband 19, das über eine Umlenkrolle 41 auf der Einlaufseite 42 der Andruckwalze 15 in den Durchtrittsspalt 23 einläuft, in Pfeilrichtung a über den Auflagetisch 22 vorwärts bewegt und bei dieser Vorwärtsbewegung wird von dem Folienband 19 die Farbe, insbesondere eine schwarze Farbe, heiß auf die erhabenen Buchstaben, Zahlen, figürlichen Darstellungen und dergleichen sowie den erhabenen Rand des Kennzeichenschildes 3 aufgedruckt. Bei der Verschiebung des Kennzeichenschildes 3 über den Auflagetisch 22 dient das Kunststoff-Folienband 19 auf der Unterseite 3b des Kennzeichenschildes 3 als Gleitmittel.

Das eingefärbte Kennzeichenschild 3 wird von Hand der Einfärbmaschine 5 entnommen und von dem verbrauchten Folienband 19 wird ein Teil abgeschnitten und als Abfall entsorgt. Dabei wird nur soviel verbrauchtes Folienband 19 abgeschnitten, daß zum Einfärben des nächsten Kennzeichenschildes 3 noch genügend verbrauchtes Folienband zum Anlegen an die Schildunterseite 3b als Gleitmittel zur Verfügung steht.

Bei einer Serienfertigung von Kennzeichenschildern können diese aneinanderstoßend auf den Auflagetisch 22 der Einfärbmaschine 5 aufgelegt werden. In diesem Fall wird das Folienband 19 lediglich um das Einschiebeende 3a des ersten Kennzeichenschildes 3 gegen die Unterseite 3b desselben gelegt, da die für das Abwickeln des Folienbandes von der Abwickelspule 18 erforderliche Bandzugspannung nicht unterbrochen wird. Bei der Entnahme eines fertigen Schildes 3 aus der Einfärbmaschine 5 wird jeweils die angefallene Länge des verbrauchten Folienbandmaterials von dem Folienband 19 abgeschnitten.

## Patentansprüche

1. Maschine zur Herstellung von Schildern, insbesondere Kraftfahrzeug-Kennzeichenschildern, die eine Maschineneinheit (1) bildet, die aus einer Presse (2) zum Prägen von Kraftfahrzeug-Kennzeichenschildern (3) mit Kennzeichennummern aus Schildplatinen (4) aus Blech und einer Maschine (5) zum Einfärben der geprägten Kennzeichenschilder (3) besteht, **dadurch gekennzeichnet, daß** die Einfärbmaschine (5) für die Kennzeichenschilder (3) auf dem Gehäuse (6) der Prägepresse (2) befestigt ist.

2. Maschine nach Anspruch 1, **gekennzeichnet durch** eine Einfärbmaschine (5) für die Kennzeichenschilder (3) mit einer beheizten Andruckwalze (15), die **durch** einen Elektromotor (16) drehangetrieben und in einem Schwenkrahmen (17) drehbar gelagert ist, einer vor der Andruckwalze (15) angeordneten Abwickelspule (18) für ein auf der Bandunterseite (20) mit heiß ablösbarer Farbe beschichtetes Kunststoff-Folienband (19) zum Einfärben der Legende eines Schildes (3) und des Schildrandes sowie einem auf dem Oberrahmen (21) des Pressengehäuses (6) befestigten Auflagetisch (22) für die geprägten, einzufärbenden Kennzeichenschilder (3), wobei der Durchtrittsspalt (23) für die Kennzeichenschilder (3) zwischen Andruckwalze (15) und Auflagetisch (22) **durch** Anstellen und Abheben des Schwenkrahmens (17) mit der Andruckwalze (15) gegen den bzw. von dem Auflagetisch (22) einstellbar und beim Einfärben der geprägten Legende eines Kennzeichenschildes (3) das in den Durchtrittsspalt (23) eingeschobene Kennzeichenschild (3) zusammen mit dem um das Einschiebeende (3a) des Schildes (3) an die Unterseite (3b) desselben angelegten, als Gleitmittel dienenden, verbrauchten Folienband (19) **durch** die rotierende Andruckwalze (15) über den Auflagetisch (22) transportiert wird.

3. Maschine nach Anspruch 1 und 2, **gekennzeichnet durch** eine Presse (2) zum Prägen von Schildern (3) mit einem Hubtisch (7) mit einer Druckplatte (8) zur Aufnahme von auf einer Schiebeplatte (9) angeordneten Prägewerkzeugen (10) mit einer in diese eingesetzten Schildplatine (4), einer an einem Joch (11) befestigten Gegendruckplatte (12) sowie einem Hydraulikaggregat mit einer elektromotorisch betriebenen Hydraulikpumpe zum Antrieb des einfachwirkenden Druckkolbens (14) mindestens eines Hydraulikzylinders (13) zur Betätigung der Druckplatte (8).

4. Maschine nach einem der Ansprüche 1 bis 3, **gekennzeichnet durch** eine Steuereinheit (32) für den elektrischen Antriebsmotor (16) der Andruckwalze (15) und den Heizkasten (26) zum Aufheizen der mit Gummi oder dergleichen Material beschichteten Andruckwalze (15) der Einfärbmaschine (5) sowie für die elektrische Pumpe des Hydraulikaggregats für den Hubantrieb der Druckplatte (8) der Prägepresse (2).

## Claims

1. Machine for producing plates, especially motor vehicle licence plates, the machine forming a machine unit (1) consisting of a press (2) for embossing motor vehicle licence plates (3) with characters from blank plates (4) of sheet material and of a machine (5) for inking the embossed licence plates (3), **characterised in that** the inking machine (5) for the licence plates (3) is fixed on the housing (6) of the embossing press (2).

2. Machine as claimed in claim 1, **characterised by** an inking machine (5) for the licence plates (3) with a heated pressing roller (15) rotated by an electromotor (16) and rotatable in a pivoting frame (17), further with a feed reel (18), located upstream of the pressing roller (15), for a plastics foil strip (19) coated on the strip underside with a hot-removable paint for inking the legend of the plate (3) and the plate rim, and with a bearing table (22), fixed on the upper frame (21) of the press housing (6), for the embossed licence plates 83) to be inked, the passing-through gap (23) for the licence plates (3) between the pressing roller (15) and the bearing table (22) being adjustable by lowering and lifting the pivoting frame (17) with the pressing roller (15) against and from, respectively, the bearing table (22), and during inking of the embossed legend of a licence plate (3) the licence plate (3), pushed into the passing-through gap (23), together with the used foil strip (19) applied around the pushing-in end (3a) of the plate (3) on the underside (3b) thereof and serving as a lubricant, is transported by the rotating pressing roller (15) over the bearing table (22).

3. Machine as claimed in claims 1 and 2, **characterised by** a press (2) for embossing plates (3), the press having a lifting table (7) with a pressure plate (8) for receiving embossing tools (10), positioned on a pushing plate (9), with a blank plate (4) inserted therein, further with a back-pressure plate (12) fixed to a yoke (11) and with a hydraulic control unit having an electromotively driven hydraulic pump for driving the single-acting pressure piston (14) of at least one hydraulic cylinder (13) for operating the pressure plate (8).

4. Machine according to any one of claims 1 to 3, **characterised by** a control unit (32) for the electric driving motor (16) of the pressing roller (15) and for the heating box (26) for heating the pressing roller (15) of the inking machine (5), the pressing roller being coated with gum or the like material, and for the electric pump of the hydraulic unit for the lifting motion of the pressure plate (8) of the embossing press (2).

## Revendications

1. Machine pour fabriquer des plaques, en particulier des plaques d'immatriculation de véhicule, qui forme une unité mécanique (1) composée d'une part d'une presse (2) pour estamper des numéros d'immatriculation sur des plaques d'immatriculation (3) formées de flans de plaque (4) en tôle et d'autre part d'une machine (5) pour colorer les plaques d'immatriculation (3) estampées,
**caractérisée en ce que** la machine à colorer (5) les plaques d'immatriculation (3) est fixée sur le boîtier (6) de la presse à estamper (2).

2. Machine selon la revendication 1, **caractérisée par** une machine à colorer (5) les plaques d'immatriculation (3) comportant
- un cylindre de pression (15) chauffé qui est entraîné en rotation par un moteur électrique (16) et est monté de façon à pouvoir tourner dans un cadre pivotant (17),
- une bobine de déroulement (18) placée en amont du cylindre de pression (15) et destinée à une bande en feuille en matière plastique (19), revêtue de colorant détachable à chaud sur le côté inférieur de la bande (20), pour colorer le libellé d'une plaque (3) et le bord de plaque et
- une table porte-pièce (22) fixée sur le cadre supérieur (21) du corps de la presse (6) et destinée aux plaques d'immatriculation (3) estampées à colorer,
la fente de passage (23) destinée aux plaques d'immatriculation (3) et située entre le cylindre de pression (15) et la table porte-pièce (22) pouvant être réglée en approchant de la table porte-pièce (22) le cadre pivotant (17) ainsi que le cylindre de pression (15) ou en les soulevant de cette table,
et, lorsqu'on colore le libellé estampé de la plaque d'immatriculation (3), la plaque d'immatriculation (3) insérée dans la fente de passage (23) ainsi que la bande en feuille (19) usagée qui est appliquée autour de l'extrémité d'insertion (3a) de la plaque (3) sur son côté inférieur (3b) et qui sert de lubrifiant sont transportées sur la table porte-pièce (22) par le cylindre de pression (15) qui tourne.

3. Machine selon la revendication 1 et 2, **caractérisée par** une presse (2) pour estamper des plaques (3) comportant
- une table élévatrice (7) munie d'une plaque de compression (8) pour recevoir des outils d'estampage (10) placés sur une plaque coulissante (9) et un flan de plaque (4) inséré dans ces outils,
- une plaque de compression opposée (12) fixée sur une entretoise (11) et
- un groupe hydraulique comportant une pompe hydraulique entraînée par un moteur électrique et destinée à entraîner le piston de compression (14) à simple effet d'au moins un vérin hydraulique (13) pour actionner la plaque de compression (8).

4. Machine selon l'une des revendications 1 à 3, **caractérisée par** une unité de commande (32) pour
- le moteur d'entraînement (16) électrique du cylindre de pression (15) et
- le caisson chauffant (26) destiné à chauffer le cylindre de pression (15) - de la machine à colorer (5) - revêtu de caoutchouc ou d'un matériau comparable ainsi que
- la pompe électrique du groupe hydraulique pour entraîner vers le haut la plaque de compression (8) de la presse à estamper (2).
